# EUROPÄISCHE PATENTSCHRIFT

(11) **EP 1 439 295 B1**
(45) Veröffentlichungstag und Bekanntmachung des Hinweises auf die Patenterteilung: **05.03.2008**
(21) Anmeldenummer: 04100068.8
(22) Anmeldetag: 12.01.2004
(51) Int. Cl.: F02D 41/04, F02N 11/08

(54) **Verfahren zum kontrollierten Abstellen einer Brennkraftmaschine**
Method for controlling the shutdown of a combustion engine
Procédé de contrôle de l'arrêt d'un moteur à combustion interne

(30) Priorität: 17.01.2003 DE 10301695
(43) Veröffentlichungstag der Anmeldung: 21.07.2004
(73) Patentinhaber: Siemens VDO Automotive AG, 93055 Regensburg (DE)
(72) Erfinder: Bauer, Erwin, 93059, Regensburg (DE); Ellmer, Dietmar, 93057, Regensburg (DE); Lauer, Thorsten, 93059, Regensburg (DE)

(56) Entgegenhaltungen:
- EP-A- 1 074 713
- EP-A- 1 367 256
- EP-A- 1 413 727
- WO-A-01/44636

## Beschreibung

Die Erfindung betrifft ein Verfahren zum kontrollierten Abstellen einer Brennkraftmaschine, bei dem nach Beendigung des regulären Betriebes der Brennkraftmaschine durch passiven Eingriff die im Nachlauf der Brennkraftmaschine noch vorhandene Drehbewegung ausgenutzt und so beeinflusst wird, dass die Kurbelwelle der Brennkraftmaschine in einer vorgebbaren definierten Winkelstellung zum Stillstand kommt, wobei die Druckverhältnisse in mindestens einem Zylinder der auslaufenden Brennkraftmaschine derart beeinflusst werden, dass eine von der Änderung der Druckverhältnisse abhängige Änderung der Ladungswechselarbeit zur Steuerung des Auslaufs der Kurbelwelle dient, und wobei Mittel zur Erfassung der Bewegung der Kurbelwelle und ein Steuergerät vorgesehen sind, in welchem ein Soll-Auslaufverlauf der Kurbelwelle abgespeichert ist, mit dem eine vorgegebene Stillstandsposition anfahrbar ist, so dass der Soll-Auslaufverlauf vom Steuergerät mit einem Ist-Auslaufverlauf verglichen wird und die Abweichung der beiden Größen als Regelgröße zur Beeinflussung der Druckverhältnisse in dem mindestens einen Zylinder dient; dass bei einer abgasturboaufgeladenen Brennkraftmaschine ein Wastegate verwendet wird, um den Abgasgegendruck zu steuern und dadurch die Ausschiebearbeit zu verändern, oder dass bei einer abgasturboaufgeladenen Brennkraftmaschine der Verdichter gegen eine teilgeschlossene Drosselklappe arbeitend betrieben wird, um den Abgasdruck zu steuern und dadurch die Ausschiebearbeit zu verändern.

Ein derartiges Verfahren ist bereits aus der WO 01/44636 A2 bekannt.

Wenn die Verbrennungsvorgänge in den Zylindern einer Brennkraftmaschine beendet werden, erfolgt derzeit üblicherweise ein kurzer Auslauf, der weder überwacht noch gesteuert erfolgt, so dass die Kolben der Zylinder, bzw. die damit korrespondierende Winkelstellung der Kurbelwelle, in einer zufälligen Position zum Stillstand kommen. Eine zufällige Stillstandsposition ist im Rahmen der bisherigen Startverfahren, bei denen die Kurbelwelle des Motors zum Starten mit Hilfe eines Anlassers gedreht wird, auch völlig unproblematisch. Im Zusammenhang mit neueren Strategien für einen angestrebten Start-Stop-Betrieb, insbesondere beim so genannten Instant Start, werden jedoch zunehmend Startverfahren bekannt, die an Voraussetzungen hinsichtlich der Startposition, und das heißt auch: hinsichtlich der Stillstandsposition der Kolben, gebunden sind.

Unter Instant Start wird das Starten eines mit Kraftstoff-Direkteinspritzung arbeitenden Verbrennungsmotors ohne Benutzung des Anlassers verstanden. Nach dem Abstellen des Motors erfolgt der Startvorgang dadurch, dass in einen Zylinder eine bestimmte Kraftstoffmenge eingespritzt wird, der Kraftstoff mit der im Zylinder befindlichen Luft ein zündfähiges Gemisch bildet, dieses Gemisch durch einen Zündvorgang (Funken der Zündkerze) zur Explosion gebracht und durch das dabei entstehende Moment der Motor in Gang gesetzt wird. Das vorangegangene Abstellen und nachfolgende Starten des Motors erfolgt dabei nicht durch den Fahrer, sondern allein durch Eingriff der Motorsteuerung. Dieses Startverfahren eignet sich vor allem für den Stadtbetrieb (Stop and Go) und dient zur Kraftstoffersparnis und zur Vermeidung von Emissionen.

Die Problematik liegt hierbei darin, dass für den Startvorgang relativ enge Bedingungen erfüllt sein müssen. Neben einer ausreichenden Motorbetriebstemperatur ist es insbesondere notwendig, dass sich der Kolben des zu zündenden Zylinders in einer bestimmten Position befindet. Ein Zündvorgang ist generell nur bei geschlossenen Ventilen und einer drehrichtungskorrekten Abwärtsbewegung des Kolbens sinnvoll, d. h., es kommt nur eine Position zwischen Zünd-OT und den anschließenden etwa 180° Kurbelwinkel in Frage. Der Bereich wird weiter eingeschränkt, da auch die Bereiche um die Totpunkte wegfallen. Im oberen Totpunkt befindet sich zu wenig Luft im Zylinder und im unteren Totpunkt kann der Kolben kein Moment mehr aufbringen. Letztlich bleibt allenfalls ein sehr schmales Band im Bereich von ca. 90° Kurbelwinkel nach dem Zünd-OT für einen möglichen Instant Start übrig. Solange der Motor nach dem Abstellen jedoch, wie bisher, eher zufällig zum Stehen kommt, kann nur in seltenen Fällen davon ausgegangen werden, dass die Grundvoraussetzung für einen Instant Start, nämlich die richtige Positionierung eines Kolbens, erfüllt ist.

In der Offenlegungsschrift DE 100 30 001 A1 wird zwischen einem aktiven und passiven Eingriff zum Anfahren einer vorgebbaren Winkelstellung der Kurbelwelle unterschieden. Während für einen aktiven Eingriff Mittel, beispielsweise ein Elektromotor, vorgeschlagen werden, durch die die Kurbelwelle im Auslauf mit einem steuerbaren Drehmoment beaufschlagt werden soll, wird das gattungsgemäße Verfahren, bei dem die restliche Drehbewegung der Kurbelwelle ausgenutzt und beeinflusst werden soll, dort nicht näher spezifiziert.

Aus der EP 1 367 256 A1 ist ein Verfahren zur Verbesserung der Ausgangsbedingungen für ein starterloses Anlassen einer Brennkraftmaschine mit Direkteinspritzung beschrieben. Über Maßnahmen wie ein Verstellen der Drosselklappe, eine Veränderung der Ventilsteuerung, das Öffnen eines Sekundärluftsystems oder dergleichen wird dafür gesorgt, dass die Brennkraftmaschine bei ihrem Auslaufen möglichst viel Frischluft in die Zylinder saugt und die verbrannten Abgase möglichst vollständig entfernt werden. Des Weiteren kann durch Maßnahmen zum Abbremsen und/oder aktiven Drehen der Brennkraftmaschine erreicht werden, dass die Kurbelwelle in einer für das erneute Starten geeigneten Position stehen bleibt.

Die EP 1 074 713 A1 offenbart ein Verfahren für den vereinfachten Wiederstart eines Verbrennungsmotors nach dessen Abstellen. Hierbei wird durch zeitlich aufeinander abgestimmtes Öffnen und Schließen von Ein- und Auslassventilen der Brennkraftmaschine eine gezielte Verlangsamung der Kurbelwelle realisiert. Anschließend findet ein Blockieren der Kurbelwelle statt.

Der Erfindung liegt die Aufgabe zugrunde, ein Verfahren zu schaffen, welches durch passiven Eingriff das Anfahren einer für einen Instant Start notwendigen Kolbenposition nach dem Abstellen der Brennkraftmaschine ermöglicht.

Die Lösung dieser Aufgabe gelingt mit einem Verfahren gemäß Anspruch 1. Weiterbildungen und bevorzugte Maßnahmen ergeben sich aus den Unteransprüchen.

Das erfindungsgemäße Verfahren der eingangs genannten Art löst die Aufgabe dadurch, dass bei einer abgasturboaufgeladenen Brennkraftmaschine ein Wastegate verwendet wird, um den Abgasgegendruck zu steuern und dadurch die Ausschiebearbeit zu verändern, oder dass bei einer abgasturboaufgeladenen Brennkraftmaschine der Verdichter gegen eine teilgeschlossene Drosselklappe arbeitend betrieben wird, um den Abgasdruck zu steuern und dadurch die Ausschiebearbeit zu verändern.

Besonders vorteilhaft ist es, dass bei Motoren, die die erforderlichen Komponenten (zumindest im wesentlichen) ohnehin schon aufweisen, eine reine Softwarefunktion, die beispielsweise im zentralen Motorsteuergerät enthalten ist, das kontrollierte Abstellen ermöglicht. Dazu können Mittel zur Erfassung der Bewegung der Kurbelwelle und ein Steuergerät vorgesehen werden, in welchem ein Soll-Auslaufverlauf der Kurbelwelle, mit dem eine vorgegebene Stillstandsposition anfahrbar ist, abgespeichert wird. Der Soll-Auslaufverlauf wird dann vom Steuergerät mit dem Ist-Auslaufverlauf verglichen und die Abweichung der beiden Größen dient als Regelgröße zur Beeinflussung der Druckverhältnisse in dem mindestens einen Zylinder.

Besonders vorteilhaft, insbesondere im Zusammenhang mit der softwaregesteuerten Nachregelung, ist es auch, mit der gezielten Beeinflussung des Abstellverhaltens bereits beim Abstellvorgang zu beginnen und das Abstellen, d. h. das Abschalten der Einspritzung, aus einem definierten und bekannten Zustand heraus vorzunehmen. Beispielsweise kann das Steuergerät mit Blick auf den Soll-Auslaufverlauf das Abschalten bei Vorliegen einer vorgegebenen Leerlaufdrehzahl vornehmen.

Die Erfindung wird nachfolgend an Ausführungsbeispielen anhand der Figuren der Zeichnung näher erläutert. Es zeigt
- Figur 1: ein Flussdiagramm mit den in der bevorzugten Ausführungsform zum kontrollierten Abstellen durchzuführenden Verfahrensschritten,
- Figur 2: eine stark schematisierte Anordnung zur Durchführung eines erfindungsgemäßen Verfahrens.

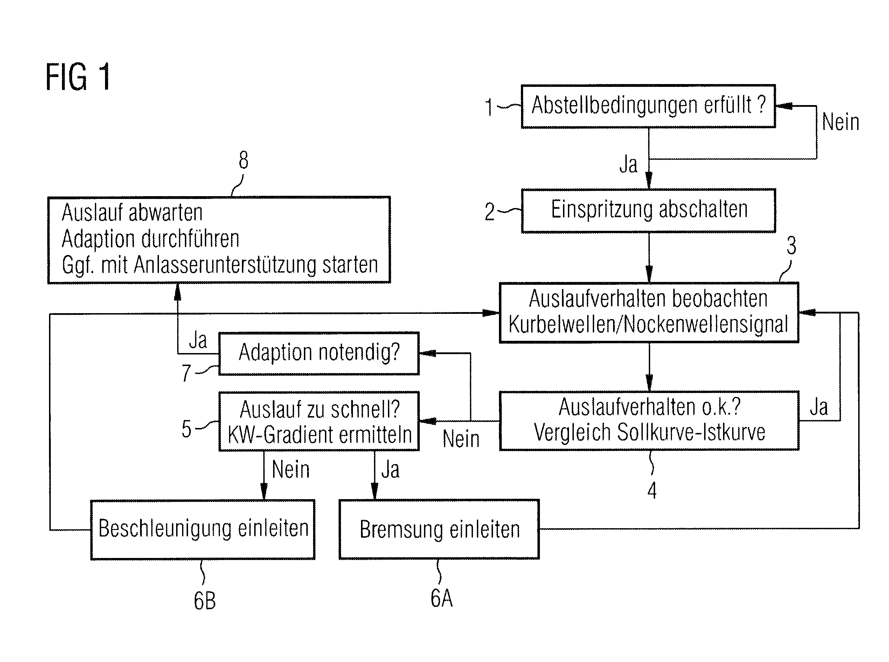

In Figur 1 ist ein Realisierungsbeispiel für eine softwaregesteuerte Regelung dargestellt, mit der das gewünschte kontrollierte Abstellen erreicht wird. Im einzelnen erfolgt im Schritt 1 eine Abfrage, ob gewisse Abstellbedingungen, die beispielsweise als Voraussetzungen eines verwendbaren Soll-Auslaufverlaufs gelten müssen, tatsächlich erfüllt sind. Abgefragt werden können insbesondere die Leerlaufdrehzahl, die Öltemperatur, die Kühlmitteltemperatur oder die Kurbelwellen/Nockenwellen-Position. Sind die vorab definierten, im Steuergerät gespeicherten Abstellbedingungen nicht gegeben, so wird mit der Abfrage gemäß Schritt 1 fortgefahren.

Trifft die Abfrage des Schrittes 1 dagegen zu, so schließt sich an Schritt 1 ein Schritt 2 an, in welchem die Einspritzung in die Zylinder abgeschaltet wird. Im nächsten Schritt 3 erfolgt das Monitoring des Auslaufverhaltens der nachlaufenden Zylinder bzw. der Kurbelwelle. Die Position und Geschwindigkeit der Kurbelwelle wird üblicherweise ohnehin in an sich bekannter Weise beispielsweise mit Hall-Drehsensoren überwacht. Das Auslaufverhalten kann alternativ auch anhand eines Nockenwellensignals beobachtet werden.

Im folgenden Schritt 4 erfolgt ein Vergleich des beobachteten Ist-Auslaufverhaltens mit einer im Steuergerät gespeicherten Soll-Auslaufkurve und eine damit einhergehende Abfrage, ob kein Nachregelungsbedarf beim Auslauf besteht. Ist das der Fall, ist also der Ist-Auslauf gerade so, wie im Soll-Auslauf für eine vorgegebene Stillstandsposition vorgesehen, so erfolgt ein Rücksprung zum Schritt 3, d. h. das Auslaufverhalten wird, solange es korrekt bleibt, einfach weiterhin beobachtet.

Trifft die Abfrage im Schritt 4 dagegen nicht zu, so wird im nächsten Schritt 5 abgefragt, ob der Ist-Auslauf zu schnell oder zu langsam erfolgt, ob also der Ist-Wert des Gradienten der Kurbelwellengeschwindigkeit zu groß oder zu klein ist. Im Falle eines zu schnellen Auslaufs wird gemäß des folgenden Schrittes 6A mittels eines geeigneten, die Druckverhältnisse im Zylinder beeinflussenden Stellorgans eine schnellere Verringerung des Gradienten der Kurbelwellengeschwindigkeit ("Bremsung") eingeleitet, woraufhin ein Rücksprung zu Schritt 3 erfolgt, um die Auswirkung der erfolgten Nachregelung zu beobachten.

Im Falle eines zu langsamen Auslaufs hingegen, wird im auf den Schritt 5 folgenden Schritt 6B der Gradient der Kurbelwellengeschwindigkeit durch entsprechende, auf die Druckverhältnisse im Zylinder wirkende, Maßnahmen so beeinflusst, dass sich der Ist-Wert des Gradienten der Kurbelwellengeschwindigkeit durch langsamere Verringerung wieder dem SollWert des Gradienten der Kurbelwellengeschwindigkeit annähert, was, nach Rücksprung zu Schritt 3, anhand der Beobachtung des nachgeregelten, tatsächlichen Auslaufverhaltens überprüft wird.

Beispiele für die Stellorgane und damit Stellgrößen, die in modernen Verbrennungsmotoren zur Verfügung stehen, um die Druckverhältnisse im Zylinder beeinflussen zu können, sind:
- Nockenwellenverstellung (Cam-Phasing)
- Ventilhub bei hubvariablen Systemen
- Drosselklappenstellung
- Abgasklappenstellung
- Soundflaps
- Drallklappenstellung
- Motorbremsen (Staudruckbremse)

In van Basshuysen/Schäfer (Hrsg.), Handbuch Verbrennungsmotor, Vieweg Verlag, 2. Auflage 2002, sind, insbesondere in Kapitel 10, zahlreiche dieser bzw. weiterer Möglichkeiten erörtert, durch die die beim Ladungswechsel der Zylinder von den Kolben zu leistende Ladungswechselarbeit, die insbesondere von den Strömungsverhältnissen im Ansaugtrakt und im Abgastrakt des Motors abhängt, vergrößert oder verkleinert werden kann. Beispielsweise wird in Otto-Motoren die im Teillastgebiet für die gewünschte Last erforderliche Ladungsmenge durch die Verstellung der Drosselklappe erreicht, d. h. durch Strömungsquerschnittsveränderung. Der Kolben muss entsprechend dem Druckverlust an dieser Stelle gegen einen niedrigeren Druck als dem atmosphärischen ansaugen. Im Leerlaufbereich kann die erhöhte Ansaugarbeit bis zu 30 Prozent der vom Motor verrichteten Arbeit ausmachen. Eine erhöhte Ladungswechselarbeit ergibt sich nicht nur durch das Ansaugen von Frischluft bei Unterdruck, sondern auch während des Ausschiebens des Abgases. Obwohl die Abgase einen höheren Druck als den atmosphärischen haben, können sie den Zylinder durch den Auslass und das Abgassystem nicht ohne Arbeitseinsatz des Kolbens verlassen, wobei der Abgasgegendruck bestimmend ist. Auch nach dem Ende der Verbrennungsvorgänge, also während des Nachlaufs, behalten derartige Maßnahmen zur Beeinflussung der Frischgaszuführung und der Abgasentfernung über die entsprechenden Lastwechselarbeitsverluste ihren bestimmenden Einfluss auf die mehr oder weniger große Hemmung der restlichen Kolbenbewegung und damit der restlichen Drehbewegung der Kurbelwelle bei, so dass sie erfindungsgemäß zum Anfahren einer erwünschten Stillstandsposition herangezogen werden können.

Weitere Einflussmöglichkeiten ergeben sich bei turboaufgeladenen Motoren. Hier kann beispielsweise das Wastegate dazu verwendet werden, den Abgasgegendruck zu steuern. Denkbar ist auch, den Verdichter gegen eine mehr oder weniger geschlossene Drosselklappe arbeiten zulassen. Das Verdichterrad wird dabei abgebremst, gleichzeitig auch das Turbinenrad und die Turbine wirkt für den Abgasstrom wie eine Drossel mit entsprechendem Einfluss auf den Abgasdruck.

Bei Nicht-Zutreffen der in der Figur 1 in Schritt 4 dargestellten Abfrage kann im Übrigen in einem Schritt 7 auch überprüft werden, ob eine Adaption des Soll-Auslaufverhaltens notwendig ist. Dies kann beispielsweise nach einer größeren Kilometerleistung des betreffenden Motors erforderlich sein. Falls ja, kann in einem folgenden Schritt 8, nach Abwarten des Auslaufs, eine Adaption durchgeführt werden, bzw. es kann der nächste Start mit Anlasserunterstützung durchgeführt werden.

Der generelle Vorteil des erfindungsgemäßen Verfahrens besteht darin, dass nach dem Abstellen des Motors ein gewünschter Zylinder genau die Position einnimmt, die für einen Instant Start notwendig ist. Das Verfahren schafft also erst die Voraussetzungen für diese Betriebsart.

Das Verfahren eröffnet darüber hinaus die Möglichkeit, dass in effektiver Weise, d. h. mit Blick auf verschiedene Zylinder, eine von mehreren möglichen vorgebbaren Stillstandspositionen in Abhängigkeit von der Größe der Abweichung der beiden Größen Soll-Auslaufverlauf und Ist-Auslaufverlauf ausgewählt und angefahren wird.

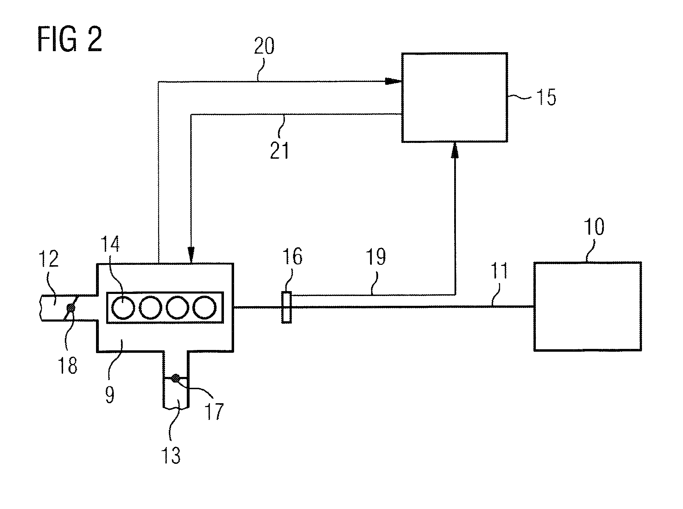

Figur 2 zeigt, in stark schematisierter Darstellung, eine Brennkraftmaschine 9, deren Kurbelwelle 11 mit einem Getriebe 10 verbunden ist. Die Brennkraftmaschine 9 verfügt über mindestens einen Zylinder 14, ein Ansaugsystem 12 sowie ein Abgassystem 13. Im Ansaugsystem 12 kann in bekannter Weise beispielsweise eine Drosselklappe 18 angeordnet sein, während im Abgassystem 13 beispielsweise ein an sich bekanntes Wastegate 17 angeordnet sein kann. Der Bewegungszustand der Kurbelwelle 11 kann in üblicher Weise über ein (nicht dargestelltes) Geberrad und einen Sensor 16 bestimmt werden. Die Ausgangssignale des Sensors 16 sowie weitere Betriebssignale des Motors 9 werden über Verbindungen 19 und 20 einem Steuergerät 15 zugeführt. Über die Verbindung 21 führt das Steuergerät 15 dem Motor 9 insbesondere die für das kontrollierte Abstellen erforderlichen Steuersignale zu.

## Patentansprüche

1. Verfahren zum kontrollierten Abstellen einer Brennkraftmaschine (9),
- bei dem nach Beendigung des regulären Betriebes der Brennkraftmaschine (9) durch passiven Eingriff die im Nachlauf der Brennkraftmaschine (9) noch vorhandene Drehbewegung ausgenutzt und so beeinflusst wird, dass die Kurbelwelle (11) der Brennkraftmaschine (9) in einer vorgebbaren definierten Winkelstellung zum Stillstand kommt,
- wobei die Druckverhältnisse in mindestens einem Zylinder (14) der auslaufenden Brennkraftmaschine (9) derart beeinflusst werden, dass eine von der Änderung der Druckverhältnisse abhängige Änderung der Ladungswechselarbeit zur Steuerung des Auslaufs der Kurbelwelle (11) dient,
- und wobei Mittel (16) zur Erfassung der Bewegung der Kurbelwelle (11) und ein Steuergerät (15) vorgesehen sind, in welchem ein Soll-Auslaufverlauf der Kurbelwelle (11) abgespeichert ist, mit dem eine vorgegebene Stillstandsposition anfahrbar ist, so dass der Soll-Auslaufverlauf vom Steuergerät (15) mit einem Ist-Auslaufverlauf verglichen wird und die Abweichung der beiden Größen als Regelgröße zur Beeinflussung der Druckverhältnisse in dem mindestens einen Zylinder (14) dient, wobei
Strömungsverhältnisse in einem Abgassystem (13) der Brennkraftmaschine (9) beeinflusst werden, **dadurch gekennzeichnet, dass** bei einer abgasturboaufgeladenen Brennkraftmaschine (9) ein Wastegate (17) verwendet wird, um den Abgasgegendruck zu steuern und **dadurch** die Ausschiebearbeit zu verändern, oder dass bei einer abgasturboaufgeladenen Brennkraftmaschine (9) der Verdichter gegen eine teilgeschlossene Drosselklappe (18) arbeitend betrieben wird, um den Abgasdruck zu steuern und **dadurch** die Ausschiebearbeit zu verändern.

2. Verfahren nach Anspruch 1,
**dadurch gekennzeichnet, dass** das Abschalten der Einspritzung beim Abstellen im Hinblick auf den Soll-Auslaufverlauf aus einem definierten und bekannten Zustand heraus erfolgt.

3. Verfahren nach Anspruch 1 oder 2,
**dadurch gekennzeichnet, dass** eine von mehreren möglichen vorgebbaren Stillstandspositionen in Abhängigkeit von der Größe der Abweichung der beiden Größen Soll-Auslaufverlauf und Ist-Auslaufverlauf ausgewählt und angefahren wird.

4. Verfahren nach einem der Ansprüche 1 bis 3,
**dadurch gekennzeichnet, dass** der Soll-Auslaufverlauf adaptiv an ein verändertes Ist-Auslaufverlauf-Verhalten angepasst wird.

5. Verfahren nach einem der Ansprüche 1 bis 4,
**dadurch gekennzeichnet, dass** das kontrollierte Abstellen der Brennkraftmaschine (9) als Vorbereitung zu einem darauf folgenden Start ohne Benutzung des Anlassers (Instant Start) dient.

## Claims

1. Method for controlling the shutdown of an internal combustion engine (9),
- in which, after the completion of the regular operation of the internal combustion engine (9), by means of passive intervention, the rotational movement still present in the after-run of the internal combustion engine (9) is used and influenced in such a way that the crankshaft (11) in an internal combustion engine (9) comes to a stop in a preset defined angular position,
- with the compression ratios in at least one cylinder (14) of the coasting internal combustion engine (9) being influenced in such a way that a change in a gas exchange operation that depends on a change in the compression ratios serves to control coasting in the crankshaft (11),
- and with means (16) being provided for detecting the movement of the crankshaft (11) and a control unit (15), in which a nominal coasting characteristic of the crankshaft (11) is stored, by means of which a preset defined standstill position can be started so that the nominal coasting characteristic from the control unit (15) is compared to an actual characteristic and the deviation of the two variables serves as the controlled variable to influence the compression ratios in the at least one cylinder (14), with
the flow conditions in an exhaust gas system (13) of the internal combustion engine (9) being influenced, **characterized in that**, in the case of an exhaust gas turbocharged internal combustion engine (9), a wastegate (17) is used in order to control the exhaust gas counterpressure and **in that** way to change the work during expulsion, or that in the case of an exhaust gas turbocharged internal combustion engine (9), the compressor is operated working against a partially closed throttle valve (18) in order to control the exhaust gas pressure and **in that** way to change the work during expulsion.

2. Method in accordance with claim 1,
**characterised in that**, the deactivation of the injection during shutdown with respect to the nominal coasting characteristic is carried out from a defined and known state.

3. Method in accordance with claim 1 or 2,
**characterised in that**, one of a plurality of possible standstill positions given in advance as a function of the size of the deviation of the two variables nominal coasting characteristic and actual coasting characteristic is selected and started.

4. Method in accordance with one of the claims 1 to 3,
**characterised in that** the nominal coasting characteristic is adapted to a changed actual coasting characteristic behaviour in an adaptive manner.

5. Method in accordance with one of the claims 1 to 4,
**characterised in that** the controlled shutdown of the internal combustion engine (9) serves as preparation for a subsequent start without making use of the starter (instant start).

## Revendications

1. Procédé pour l'arrêt contrôlé d'un moteur à combustion interne (9),
- dans lequel, après la fin du fonctionnement régulier du moteur à combustion interne (9), le mouvement de rotation encore présent dans la marche par inertie du moteur à combustion interne (9) est utilisé et influencé par engagement passif de telle sorte que le vilebrequin (11) du moteur à combustion interne (9) s'arrête dans une position d'angle définie prédéterminable,
- les conditions de pression dans au moins un cylindre (14) du moteur à combustion interne (9) s'arrêtant étant influencées de telle sorte qu'une variation, dépendante de la variation des conditions de pression, du travail de changement de charge sert à la commande de la sortie du vilebrequin (11),
- et des moyens (16) pour la détection du mouvement du vilebrequin (11) et un appareil de commande (15) étant prévus, dans lequel une courbe de sortie théorique du vilebrequin (11) est mémorisée, avec laquelle une position d'arrêt prédéfinie peut être atteinte, de sorte que la courbe de sortie prévue est comparée par l'appareil de commande (15) avec une courbe de sortie réelle et l'écart des deux grandeurs sert de grandeur de réglage pour influencer les conditions de pression dans le au moins un cylindre (14), sachant que
des conditions d'écoulement dans un système de gaz d'échappement (13) du moteur à combustion interne (9) sont influencées, **caractérisé en ce que**, dans le cas d'un moteur à combustion interne (9) à turbocompresseur à gaz d'échappement, on utilise une soupape de décharge (17) pour commander la contre-pression des gaz d'échappement et modifier de ce fait le travail de poussée, ou **en ce que**, dans le cas d'un moteur à combustion interne (9) à turbocompresseur à gaz d'échappement, le compresseur est exploité en travaillant contre un clapet d'étranglement (18) semi fermé, afin de commander la pression des gaz d'échappement et de modifier ainsi le travail de poussée.

2. Procédé selon la revendication 1,
**caractérisé en ce que** la déconnexion de l'injection s'effectue lors de l'arrêt par rapport à la courbe de sortie théorique à partir d'un état défini et connu.

3. Procédé selon la revendication 1 ou 2,
**caractérisé en ce qu'**une de plusieurs positions d'arrêt possibles prédéfinissables est sélectionnée et atteinte en fonction de la grandeur de l'écart des deux grandeurs courbe de sortie théorique et courbe de sortie réelle.

4. Procédé selon l'une quelconque des revendications 1 à 3,
**caractérisé en ce que** la courbe de sortie théorique est adaptée de façon adaptative à un comportement modifié de la courbe de sortie réelle.

5. Procédé selon l'une quelconque des revendications 1 à 4,
**caractérisé en ce que** l'arrêt contrôlé du moteur à combustion interne (9) sert de préparation à un démarrage consécutif sans utilisation du démarreur (Instant Start).
